# EUROPEAN PATENT SPECIFICATION

(11) **EP 0 924 382 B1**
(45) Date of publication and mention of the grant of the patent: **26.01.2005**
(21) Application number: 98309883.1
(22) Date of filing: 02.12.1998
(51) Int. Cl.: F01D 5/18

(54) **Leading edge cooling for a gas turbine blade**
Kühlung der Anströmkante einer Gasturbinenschaufel
Refroidissement de l'arête amont d'une aube pour une turbine à gaz

(30) Priority: 17.12.1997 US 992322
(43) Date of publication of application: 23.06.1999
(73) Proprietor: UNITED TECHNOLOGIES CORPORATION, Hartford, CT 06101 (US)
(72) Inventor: Tabbita, Martin G., Jupiter, Florida 33458 (US); Downs, James P., Jupiter, Florida 33477 (US); Soechting, Friedrich, Tequesta, Florida 33469 (US); Auxier, Thomas A., Palm Beach Gardens, Florida 33418 (US)
(74) Representative: Leckey, David Herbert

(56) References cited:
- GB-A- 435 906
- GB-A- 2 127 105
- US-A- 5 152 667

## Description

This invention relates to cooled rotor blades and/or stator vanes for gas turbines in general, and to apparatus and methods for cooling the leading edge and establishing film cooling along the surface of the rotor blade or stator vane in particular.

In the turbine section of a gas turbine engine, core gas travels through a plurality of stator vane and rotor blade stages. Each stator vane or rotor blade has an airfoil with one or more internal cavities surrounded by an external wall. The suction and pressure sides of the external wall extend between the leading and trailing edges of the airfoil. Stator vane airfoils extend spanwise between inner and outer platforms and the rotor blade airfoils extend spanwise between a platform and a blade tip.

High temperature core gas (which includes air and combustion products) encountering the leading edge of an airfoil will diverge around the suction and pressure sides of the airfoil, or impinge on the leading edge. The point along the leading edge where the velocity of the core gas flow goes to zero (i.e., the impingement point) is referred to as the stagnation point. There is a stagnation point at every spanwise position along the leading edge of the airfoil, and collectively those points are referred to as the stagnation line. Air impinging on the leading edge of the airfoil is subsequently diverted around either side of the airfoil.

The precise location of each stagnation point along the length of the leading edge is a function of the angle of incidence of the core gas relative to the chordline of the airfoil, for both rotor and stator airfoils. In addition to the angle of incidence, the stagnation point of a rotor airfoil is also a function of the rotational velocity of the airfoil and the velocity of the core gas. Given the curvature of the leading edge, the approaching core gas direction and velocity, and the rotational speed of the airfoil (if any), the location of the stagnation points along the leading edge can be readily determined by means well-known in the art. In actual practice, rotor speeds and core gas velocities vary depending upon engine operating conditions as a function of time and position along the span of the airfoil. As a result, the stagnation points (or collectively the stagnation line) along the leading edge of an airfoil will move relative to the leading edge.

Cooling air, typically bled off of a compressor stage at a temperature lower and pressure higher than the core gas passing through the turbine section, is used to cool the airfoils. The cooler compressor air provides the medium for heat transfer and the difference in pressure provides the energy required to pass the cooling air through the stator or rotor stage.

In many cases, it is desirable to establish film cooling along the surface of the stator or rotor airfoil. A film of cooling air traveling along the surface of the airfoil transfers thermal energy away from the airfoil, increases the uniformity of the cooling, and insulates the airfoil from the passing hot core gas. A person of skill in the art will recognize, however, that film cooling is difficult to establish and maintain in the turbulent environment of a gas turbine. In most cases, film cooling air is bled out of cooling apertures extending through the external wall of the airfoil. The term "bled" reflects the small difference in pressure motivating the cooling air out of the internal cavity of the airfoil.

One of the problems associated with using apertures to establish a cooling air film is the films sensitivity to pressure difference across the apertures. Too great a pressure difference across an aperture will cause the air to jet out into the passing core gas rather than aid in the formation of a film of cooling air. Too small a pressure difference will result in negligible cooling air flow through the aperture, or an in-flow of hot core gas. Both cases adversely affect film cooling effectiveness. Another problem associated with using apertures to establish film cooling is that cooling air is dispensed from discrete points along the span of the airfoil, rather than along a continuous line. The gaps between the apertures, and areas immediately downstream of those gaps, are exposed to less cooling air than are the apertures and the spaces immediately downstream of the apertures, and are therefore more susceptible to thermal degradation. Another problem associated with using apertures to establish film cooling is the stress concentrations that accompany the apertures. Film cooling effectiveness generally increases when the apertures are closely packed and skewed at a shallow angle relative to the external surface of the airfoil. Skewed, closely packed apertures, however, create stress concentrations.

What is needed is an apparatus that provides adequate cooling along the leading edge of an airfoil, one that accommodates a variable position stagnation line, one that creates a uniform and durable cooling air film downstream of the leading edge on both sides of the airfoil, and one that creates minimal stress concentrations in the airfoil wall.

GB-A-2127105, upon which the preamble to the independent claims is based, discloses an airfoil having a trench formed in its leading edge, with cooling holes opening into the trench.

GB-A-435906 discloses a blade having multiple slots in its leading edge.

According to a first aspect of the present invention, a hollow airfoil is provide as claimed in claim 1.

According to a second aspect of the present invention, a method for cooling an airfoil is provided as claimed in claim 7.

An advantage of the present invention is that uniform and durable film cooling downstream of the leading edge is provided on both sides of the airfoil. The cooling air bleeds out of the trench on both sides and creates continuous film cooling downstream of the leading edge. The trench minimizes cooling losses characteristic of cooling apertures, and thereby provides more cooling air for film development and maintenance. z

Another advantage of the present invention is that stress is minimized along the leading edge and areas immediately downstream of the leading edge. The trench of cooling air that extends continuously along the leading edge minimizes thermally induced stress by eliminating the discrete cooling points separated by uncooled areas characteristic of conventional cooling schemes. The uniform film of cooling air that exits from both sides of the trench also minimizes thermally induced stress by eliminating uncooled zones between and downstream of cooling apertures characteristic of conventional cooling schemes.

Another advantage of the present invention is that the leading edge cooling apparatus accommodates a plurality of stagnation lines. In the most preferable embodiment, the trench is preferably centered on the stagnation line which coincides with the largest heat load operating condition for a given application, and the width of the trench is large enough such that the stagnation line will not travel outside of the side walls of the trench under all operating conditions. As a result, the present invention provides improved leading edge cooling and cooling air film formation relative to conventional cooling schemes.

A preferred embodiment of the invention will now be described by way of example only with reference to the accompanying drawings in which:
FIG. 1 is a diagrammatic perspective view of a turbine rotor blade for a gas turbine engine.
FIG.2 is a partial sectional view of the airfoil portion of the rotor blade shown in FIG. 1, including core gas flow lines to illustrate the relative position of the trench and the stagnation point of the airfoil. The partial sectional view of the airfoil shown in this drawing also represents the airfoil of a stator vane.
FIG.3 is a diagrammatic sectional view of a trench disposed in the leading edge of an airfoil.

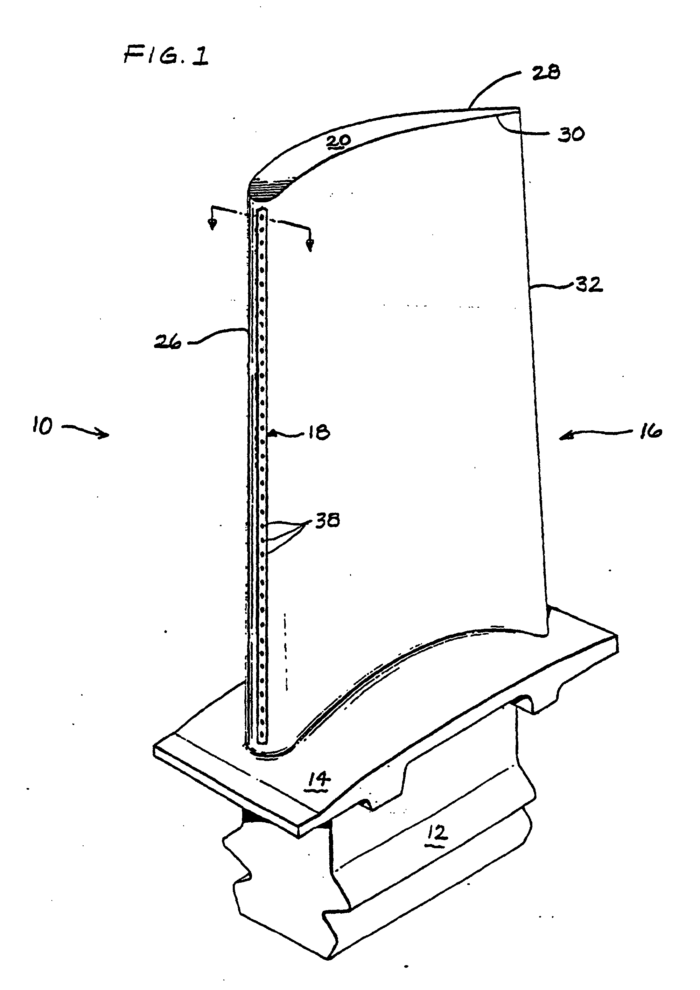

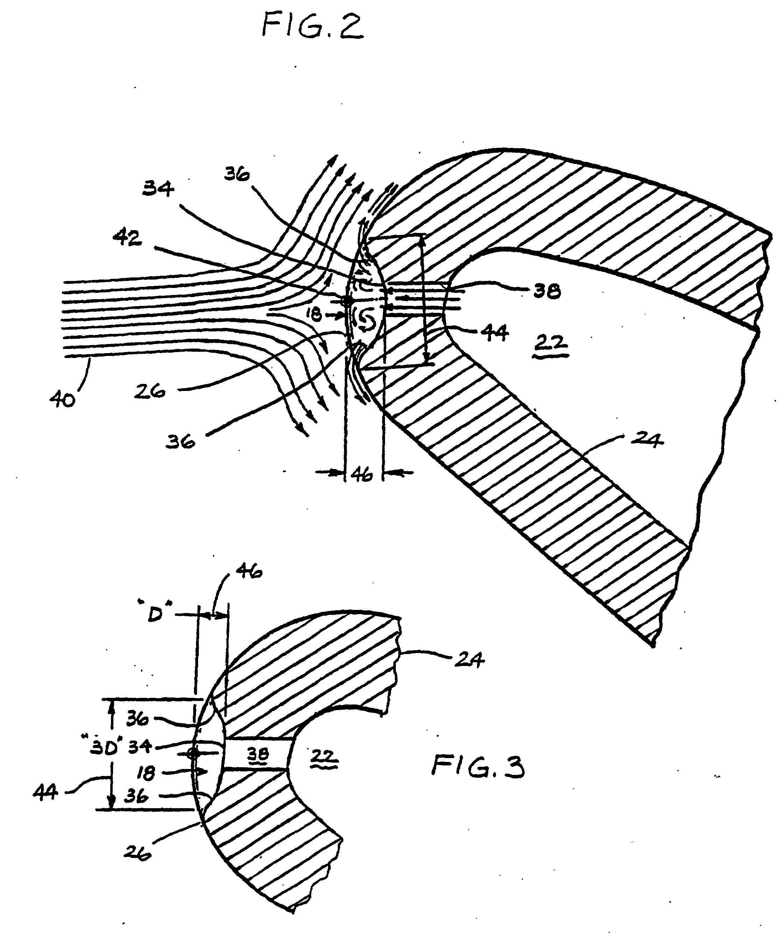

Referring to FIG.1, a gas turbine engine turbine rotor blade 10 includes a root portion 12, a platform 14, an airfoil 16, a trench 18 disposed in the airfoil 16, and a blade tip 20. The airfoil 16 comprises one or more internal cavities 22 (see FIG.2) surrounded by an external wall 24, at least one of which is proximate the leading edge 26 of the airfoil 16. The suction side 28 and the pressure side 30 of the external wall 24 extend chordwise between the leading edge 26 and the trailing edge 32 of the airfoil 16, and spanwise between the platform 14 and the blade tip 20. The leading edge 26 has a smoothly curved contour which blends with the suction side 28 and pressure side 30 of the airfoil 16.

Referring to FIG.2, the trench 18 includes a base 34 and a pair of side walls 36 disposed in the external wall 24 along the leading edge 26, preferably extending substantially the entire span 36 (see FIG. 1) of the airfoil 16. A plurality of cooling apertures 38 provide passages between the trench 18 and the forward most internal cavity 22 for cooling air. The shape of the cooling apertures 38 and their position within the trench 18 will vary depending upon the application. FIG.2 includes streamlines 40 representing core gas within the core gas path to illustrate the direction of core gas relative to the airfoil 16.

As stated earlier, the stagnation point 42 (or in collective terms, the stagnation line) at any particular position along the span will move depending upon the engine operating condition at hand. The trench 18 is preferably centered on those stagnation points 42 which coincide with the largest heat load operating condition for a given application, and the width 44 of the trench 18 is large enough such that the stagnation line 42 will not travel outside of the side walls 36 of the trench 18 under all operating conditions. If, however, it is not possible to provide a trench 18 wide enough to accommodate all possible stagnation line 42 positions, then the width 44 and the position of the trench 18 are chosen to accommodate the greatest number of stagnation lines 42 that coincide with the highest heat load operating conditions. The most appropriate trench width 44 and depth 46 for a given application can be determined by empirical study. Referring to FIG.3 for example, empirical studies indicate that a trench 18 for a rotor airfoil 16 having a depth 46 substantially equal to one (1) cooling aperture 38 diameter ("D") and a width 44 substantially equal to three (3) cooling aperture 38 diameters ("3D"), where the cooling aperture 38 is that which is disposed within the trench 18, provides favorable leading edge 26 cooling and downstream cooling air film formation.

In the operation of the invention, cooling air typically bled off of a compressor stage (not shown) is routed into the airfoil 16 of the rotor blade 10 (or stator vane) by means well known in the art. Cooling air disposed within the internal cavity 22 proximate the leading edge 26 of the airfoil 16 is at a lower temperature and higher pressure than the core gas flowing past the external wall 24 of the airfoil 16. The pressure difference across the airfoil external wall 24 forces the internal cooling air to enter the cooling apertures 38 and subsequently pass into the trench 18 located in the external wall 24 along the leading edge 26. The cooling air exiting the cooling apertures 38 diffuses into the air already in the trench 18 and distributes within the trench 18. The cooling air subsequently exits the trench 18 in a substantially uniform manner over the side walls 36 of the trench 18. The exiting flow forms a film of cooling air on both sides of the trench 18 that extends downstream.

One of the advantages of distributing cooling air within the trench 18 is that the pressure difference problems characteristic of conventional cooling apertures (not shown) are minimized. For example, the difference in pressure across a cooling aperture 38 is a function of the local internal cavity 22 pressure and the local core gas pressure adjacent the aperture 38. Both of these pressures vary as a function of time. If the core gas pressure is high and the internal cavity pressure is low adjacent a particular cooling aperture in a conventional scheme (not shown), undesirable hot core gas in-flow can occur. The present invention minimizes the opportunity for the undesirable in-flow because the cooling air from all apertures 38 distributes and increases in uniformity within the trench 18, thereby decreasing the opportunity for any low pressure zones to occur. Likewise, the distribution of cooling air within the trench 18 also avoids cooling air pressure spikes which, in a conventional scheme, would jet the cooling air into the core gas rather than add it to the film of cooling air downstream.

From the above it will be seen that there is disclosed herein an airfoil having improved cooling along the leading edge, with leading edge cooling apparatus that accommodates a plurality of stagnation lines, that establishes uniform and durable film cooling downstream of the leading edge on both sides of the airfoil, and that creates minimal stress concentrations within the airfoil wall.

Although this invention has been shown and described with respect to the detailed embodiments thereof, it will be understood by those skilled in the art that various changes in form and detail thereof may be made without departing from the scope of the invention as defined by the claims. For example, FIG.2 shows a partial sectional view of an airfoil 16. The airfoil 16 may be that of a stator vane or a rotor blade.

## Claims

1. An airfoil (10), comprising:
a body, having an external wall surrounding an internal cavity (22) and a spanwise extending leading edge (26);
a trench (18), disposed in said external wall along said leading edge (26) and extending in a spanwise direction, said trench aligned with a stagnation line (42) extending along said leading edge (26); and
a plurality of cooling apertures (38), disposed within said trench (18) and extending through said external wall, thereby providing a cooling air passage between said internal cavity (22) and said trench (18), **characterised in that**:
said trench (18) is configured and positioned such that in use stagnation lines associated with all operating conditions of the airfoil are disposed within said trench.

2. An airfoil according to claim 1, wherein said trench comprises:
a first side wall (36);
a second side wall (36);
a base (34), extending between said first and second side walls;
wherein said stagnation lines (42) are disposed between said first and second side walls (36).

3. An airfoil as claimed in claim 1 or 2, wherein said trench (18) is centred on the stagnation line associated with the largest heat load operating condition for the airfoil.

4. An airfoil according to claim 1, 2 or 3 wherein said hollow airfoil (10) is part of a stator vane.

5. An airfoil according to any of claims 1 to 3, wherein said hollow airfoil (10) is part of a rotor blade.

6. An airfoil according to any preceding claim, wherein each said cooling aperture (38) has a diameter (D) and said trench (18) has a depth (46) substantially equal to said diameter (D) and a width (44) substantially equal to three of said diameters (D).

7. method for cooling an airfoil exposed to core gas within a gas turbine engine, wherein the airfoil (10) has a body that includes an external wall that surrounds an internal cavity (22), and a spanwise extending leading edge (26) comprising the steps of:
providing a trench (18) in the external wall along the leading edge (26) aligned with a stagnation line (42);
providing a plurality of cooling apertures (38), disposed within said trench (18) and extending through to the internal cavity (22); and
providing cooling air at a temperature lower and a pressure higher than the core gas in the internal cavity (22);
whereby said higher pressure cooling air exits the internal cavity (22) via said cooling apertures (38), passes into said trench (18), and subsequently exits said trench (18) to form a film of cooling air downstream of said trench (18); **characterised by**:
providing said trench (18) with a width large enough such that said stagnation line (42) remains within said trench (18) under all airfoil operating conditions.

8. A method for cooling an airfoil according to claim 7, wherein said trench comprises a first side wall (36), a second side wall (36), and a base (34) extending between said first and second side walls (36).

9. A method for cooling an airfoil according to claim 7 or 8, further comprising the steps of:
determining said stagnation line (42) that coincides with a largest heat load capacity for a given application;
substantially centering said trench (18) on said stagnation line coinciding with said largest heat load capacity for a given application.

10. A method for manufacturing a coolable gas turbine engine airfoil (10) having a body that includes an external wall that surrounds an internal cavity (22), and a spanwise extending leading edge (26), comprising the steps of:
determining a stagnation line (42) for each of a plurality of select airfoil operating conditions;
providing a trench (18), disposed in the external wall along the leading edge (26), having a laterally extending width and a depth;
said trench (18) being aligned with said stagnation lines; and
providing a plurality of cooling apertures (38), disposed within said trench (18) and extending through to the internal cavity (22), wherein said cooling apertures (38) provide a passage for cooling air travel between said internal cavity (22) and said trench (18); **characterised by** the steps of:
determining a first lateral limit and a second lateral limit for said stagnation lines (42) for said plurality of select airfoil operating conditions, wherein said stagnation lines lie between said first and second lateral limits;
providing said trench (18) with a pair of sidewalls (36), wherein said width extends between said sidewalls; and
disposing said trench sidewalls (36) in said external wall laterally outside of or proximate said first and second lateral limits, thereby keeping all said stagnation lines between said trench side walls (36).

11. A method for manufacturing a coolable gas turbine engine airfoil according to claim 10, further comprising the steps of:
determining said stagnation line (42) that coincides with the largest heat load operating condition for a given airfoil application; and
centering said trench (18) on said stagnation line that coincides with said largest heat load operating condition.

## Patentansprüche

1. Strömungsprofil (10), aufweisend:
einen Körper mit einer äußeren Wand, welche einen inneren Hohlraum (22) umgibt, und einer sich in Erstreckungsrichtung erstreckenden Vorderkante (26);
eine Rinne (18), die in der äußeren Wand entlang der Vorderkante (26) angeordnet ist und in Erstreckungsrichtung verläuft, wobei die Rinne mit einer entlang der Vorderkante (26) verlaufenden Stagnationslinie (42) ausgerichtet ist; und
eine Mehrzahl von Kühlöffnungen (38), die in der Rinne (18) angeordnet sind und sich durch die äußere Wand erstrecken und so eine Kühlluftpassage zwischen dem inneren Hohlraum (22) und der Rinne (18) schaffen,
**dadurch gekennzeichnet, dass** die Rinne (18) derart konfiguriert und positioniert ist, dass bei Verwendung Stagnationslinien, die zu sämtlichen Betriebszuständen des Strömungsprofils gehören, in der Rinne angeordnet sind.

2. Strömungsprofil nach Anspruch 1, wobei die Rinne aufweist:
eine erste Seitenwand (36);
eine zweite Seitenwand (36);
eine Basis (34), die sich zwischen der ersten und der zweiten Seitenwand erstreckt;
wobei die Stagnationslinien (42) zwischen der ersten und der zweiten Seitenwand (36) angeordnet sind.

3. Strömungsprofil nach Anspruch 1 oder 2, wobei die Rinne (18) an der Stagnationslinie zentriert ist, die zu dem Betriebszustand der größten Hitzebelastung für das Strömungsprofil gehört.

4. Strömungsprofil nach Anspruch 1, 2 oder 3, wobei das hohle Strömungsprofil (10) Teil einer Statorleitschaufel ist.

5. Strömungsprofil nach einem der Ansprüche 1 bis 3, wobei das hohle Strömungsprofil (10) Teil einer Rotorlaufschaufel ist.

6. Strömungsprofil nach einem der vorangehenden Ansprüche, wobei jede Kühlöffnung (38) einen Durchmesser (D) hat und wobei die Rinne (18) eine Tiefe (46) hat, die im wesentlichen gleich dem Durchmesser (D) ist, und eine Breite (44) hat, die im wesentlichen gleich drei dieser Durchmesser (D) ist.

7. Verfahren zum Kühlen eines Strömungsprofils, welches Kerngas in einer Gasturbinenmaschine ausgesetzt ist, wobei das Strömungsprofil (10) einen Körper hat, der eine äußere Wand, welche einen inneren Hohlraum (22) umgibt, und eine in Erstreckungsrichtung verlaufende Vorderkante (26) aufweist, aufweisend die folgenden Schritte:
Vorsehen einer Rinne (18) in der äußeren Wand entlang der Vorderkante (26), welche mit einer Stagnationslinie (42) ausgerichtet ist;
Vorsehen einer Mehrzahl von Kühlöffnungen (38), die in der Rinne (18) angeordnet sind und sich zu dem inneren Hohlraum (22) hindurch erstrecken; und
Bereitstellen von Kühlluft bei einer Temperatur, die niedriger ist als die des Kerngases in dem inneren Hohlraum (22), und einem Druck, der höher ist als der des Kerngases in dem inneren Hohlraum (22);
wobei die Kühlluft mit dem höheren Druck den inneren Hohlraum (22) durch die Kühlöffnungen (38) verlässt und in die Rinne (18) gelangt und anschließend die Rinne (18) verlässt, um einen Film von Kühlluft strömungsabwärts der Rinne (18) zu bilden, **gekennzeichnet durch**
Vorsehen der Rinne (18) mit einer genügend großen Breite, so dass die Stagnationslinie (42) bei allen Strömungsprofil-Betriebszuständen in der Rinne (18) bleibt.

8. Verfahren zum Kühlen eines Strömungsprofils nach Anspruch 7, wobei die Rinne eine erste Seitenwand (36), eine zweite Seitenwand (36) und eine Basis (34), die sich zwischen der ersten und der zweiten Seitenwand (36) erstreckt, aufweist.

9. Verfahren zum Kühlen eines Strömungsprofils nach Anspruch 7 oder 8, ferner aufweisend die folgenden Schritte:
Bestimmen der Stagnationslinie (42), die mit der größten Hitzebelastungsfähigkeit für eine vorgegebene Anwendung zusammenfällt;
im wesentlichen Zentrieren der Rinne (18) an der Stagnationslinie, welche mit der größten Hitzebelastungsfähigkeit für eine vorgegebene Anwendung zusammenfällt.

10. Verfahren zum Herstellen eines kühlbaren Gasturbinenmaschinen-Strömungsprofils (10) mit einem Körper, der eine äußere Wand, welche einen inneren Hohlraum (22) umgibt, und eine in Erstreckungsrichtung verlaufende Vorderkante (26) aufweist, aufweisend die folgenden Schritte:
Bestimmen einer Stagnationslinie (42) für jeden aus einer Mehrzahl von ausgewählten Strömungsprofil-Betriebszuständen;
Vorsehen einer Rinne (18), die in der äußeren Wand entlang der Vorderkante (26) angeordnet ist, mit einer sich lateral erstreckenden Breite und einer Tiefe;
wobei die Rinne (18) mit den Stagnationslinien ausgerichtet ist; und
Vorsehen einer Mehrzahl von Kühlöffnungen (38), die in der Rinne (18) angeordnet sind und sich zu dem inneren Hohlraum (22) hindurch erstrecken, wobei die Kühlöffnungen (38) eine Passage für das Fließen von Kühlluft zwischen dem inneren Hohlraum (22) und der Rinne (18) schaffen, **gekennzeichnet durch** die folgenden Schritte:
Bestimmen einer ersten lateralen Grenze und einer zweiten lateralen Grenze für die Stagnationslinien (42) für die Mehrzahl von ausgewählten Strömungsprofil-Betriebszuständen, wobei die Stagnationslinien zwischen der ersten und der zweiten lateralen Grenze liegen;
Vorsehen der Rinne (18) mit einem Paar von Seitenwänden (36), wobei die Breite sich zwischen den Seitenwänden erstreckt; und
Anordnen der Rinnen-Seitenwände (36) in der äußeren Wand lateral außerhalb von oder in der Nähe der ersten und der zweiten lateralen Grenze und so Beibehalten aller Stagnationslinien zwischen den Rinnen-Seitenwänden (36).

11. Verfahren zum Herstellen eines kühlbaren Gasturbinenmaschinen-Strömungsprofils nach Anspruch 10, ferner aufweisend die folgenden Schritte:
Bestimmen der Stagnationslinie (42), die mit dem Betriebszustand der größten Hitzebelastung, für eine vorgegebene Strömungsprofilanwendung zusammenfällt; und
Zentrieren der Rinne (18) an der Stagnationslinie, die mit dem Betriebszustand der größten Hitzebelastung zusammenfällt.

## Revendications

1. Aile portante (10) comprenant :
Un corps ayant une paroi extérieure entourant une cavité intérieure (22) et un bord d'attaque (26) s'étendant dans le sens de l'envergure ;
Une tranchée (18) disposée dans ladite paroi extérieure le long dudit bord d'attaque (26) et s'étendant dans le sens de l'envergure, ladite tranchée étant alignée avec une ligne de stagnation (42) s'étendant le long dudit bord d'attaque (26) ; et
une pluralité d'ouvertures de refroidissement (38), disposées à l'intérieur de ladite tranchée (18) et s'étendant sur ladite paroi extérieure, créant ainsi un passage d'air de refroidissement entre ladite cavité intérieure (22) et ladite tranchée (18), **caractérisée en ce que** :
ladite tranchée (18) est conçue et positionnée de telle sorte qu'en fonctionnement, les lignes de stagnation associées à tous les états de fonctionnement de l'aile portante sont disposées à l'intérieur de ladite tranchée.

2. Aile portante selon la revendication 1, dans laquelle ladite tranchée comprend :
une première paroi latérale (36) ;
une deuxième paroi latérale (36) ;
une base (34), s'étendant entre ladite première paroi latérale et ladite deuxième paroi latérale ;
lesdites lignes de stagnation (42) étant disposées entre lesdites première et deuxième parois latérales (36).

3. Aile portante selon la revendication 1 ou 2, dans laquelle ladite tranchée (18) est centrée sur la ligne de stagnation associée à l'état de fonctionnement de plus grande charge thermique pour l'aile portante.

4. Aile portante selon l'une des revendications 1, 2 ou 3, dans laquelle ladite aile portante creuse (10) fait partie d'une pale de stator.

5. Aile portante selon l'une quelconque des revendications 1-3, dans laquelle ladite aile portante creuse (10) fait partie d'une aube de rotor.

6. Aile portante selon l'une quelconque des revendications précédentes, dans laquelle chacune desdites ouvertures de refroidissement (38) possède un diamètre (D) et ladite tranchée (18) possède une profondeur (46) sensiblement égale au diamètre (D) et une largeur (44) sensiblement égale à trois fois ledit diamètre (D).

7. Procédé de refroidissement d'une aile portante exposée à un gaz central à l'intérieur d'un turbomoteur, dans lequel l'aile portante (10) possède un corps qui comprend une paroi extérieure entourant une cavité intérieure (22), et un bord d'attaque (26) s'étendant dans le sens de l'envergure comprenant les étapes consistant à :
former une tranchée (18) dans la paroi extérieure le long du bord d'attaque (26) aligné sur une ligne de stagnation(42) ;
former une pluralité d'ouvertures de refroidissement (38), disposées à l'intérieur de ladite tranchée (18) et s'étendant dans la cavité intérieure (22) ; et
fournir de l'air de refroidissement à une température inférieure et à une pression supérieure au gaz central dans la cavité intérieure (22) ;
de sorte que l'air de refroidissement à pression supérieure sort de la cavité intérieure (22) via lesdites ouvertures de refroidissement (38), passe dans ladite tranchée (18) et sort ensuite de ladite tranchée (18) pour former un film d'air de refroidissement en aval de ladite tranchée (18) ; **caractérisé par** la formation de ladite tranchée (18) avec une largeur suffisamment importante pour que ladite ligne de stagnation (42) reste à l'intérieur de ladite tranchée (18) dans toutes les conditions de fonctionnement de l'aile portante.

8. Procédé de refroidissement d'une aile portante selon la revendication 7, dans lequel ladite tranchée comprend une première paroi latérale (36), une deuxième paroi latérale (36), et une base (34) s'étendant entre lesdites première et deuxième parois latérales (36).

9. Procédé de refroidissement d'une aile portante selon la revendication 7 ou 8, comprenant en outre les étapes consistant à :
déterminer ladite ligne de stagnation (42) qui coïncide avec une plus grande capacité de charge thermique pour une application donnée ;
centrer sensiblement ladite tranchée (18) sur ladite ligne de stagnation coïncidant avec ladite plus grande capacité de charge thermique pour une application donnée.

10. Procédé de fabrication d'une aile portante (10) de turbomoteur refroidissable ayant un corps qui comprend une paroi extérieure entourant une cavité intérieure (22), et un bord d'attaque (26) s'étendant dans le sens de l'envergure, comprenant les étapes consistant à :
déterminer une ligne de stagnation (42) pour chacun des états parmi une pluralité de conditions de fonctionnement d'une aile portante choisie ;
former une tranchée (18), disposée dans la paroi extérieure le long du bord d'attaque (26), ayant une largeur s'étendant latéralement et une profondeur ;
ladite tranchée (18) étant alignée sur lesdites lignes de stagnation; et
former une pluralité d'ouvertures de refroidissement (38), disposées à l'intérieur de ladite tranchée (18) et s'étendant dans la cavité intérieure (22), dans lequel lesdites ouvertures de refroidissement (38) forment un passage pour la circulation de l'air de refroidissement entre ladite cavité intérieure (22) et
ladite tranchée (18) ; **caractérisé par** les étapes consistant à :
déterminer une première limite latérale et une deuxième limite latérale pour lesdites lignes de stagnation (42) pour ladite pluralité d'états de fonctionnement d'une aile portante choisie, dans lequel lesdites lignes de stagnation se trouvent entre lesdites première et deuxième limites latérales ;
former ladite tranchée (18) avec une paire de parois latérales (36), dans lequel ladite largeur s'étend entre lesdites parois latérales ; et
disposer lesdites parois latérales (36) de la tranchée dans ladite paroi extérieure latéralement et à l'extérieur ou à proximité desdites première et deuxième limites latérales, maintenant ainsi toutes lesdites lignes de stagnation entre lesdites parois latérales (36) de la tranchée.

11. Procédé de fabrication d'une aile portante (10) de turbomoteur refroidissable selon la revendication 10, comprenant en outre les étapes consistant à :
déterminer ladite ligne de stagnation (42) qui coïncide avec l'état de fonctionnement de plus grande charge thermique pour une application d'aile portante donnée ; et
centrer ladite tranchée (18) sur ladite ligne de stagnation qui coïncide avec ledit état de fonctionnement de plus grande charge thermique.
